# EUROPÄISCHE PATENTSCHRIFT

(11) **EP 3 351 151 B1**
(45) Veröffentlichungstag und Bekanntmachung des Hinweises auf die Patenterteilung: **14.10.2020**
(21) Anmeldenummer: 18150077.8
(22) Anmeldetag: 02.01.2018
(51) Int. Cl.: A47J 41/00, B65D 47/24

(54) **ISOLIERKANNENDECKEL UND VERWENDUNGEN HIERVON**
INSULATION VESSEL COVER AND USES THEREOF
COUVERCLE ISOLANT POUR RÉCIPIENT ET SON UTILISATION

(30) Priorität: 18.01.2017 DE 102017200772
(43) Veröffentlichungstag der Anmeldung: 25.07.2018
(73) Patentinhaber: WMF Group GmbH, 73312 Geislingen/Steige (DE)
(72) Erfinder: Abele, Werner, 89558 Böhmenkirch (DE)
(74) Vertreter: Pfenning, Meinig & Partner mbB

(56) Entgegenhaltungen:
- EP-A1- 2 796 078
- JP-A- H0 856 857
- KR-B1- 101 581 270

## Beschreibung

Es wird eine Isolierkanne mit Isolierkannendeckel bereitgestellt und Verwendungen hiervon vorgeschlagen. Der erfindungsgemäße Isolierkannendeckel enthält einen Flüssigkeitskanal, der einen Ausgang an einer ersten Seitenwand des Isolierkannendeckels aufweist, wobei an diesem Ausgang mindestens zwei Strömungsbegrenzer angeordnet sind. Durch diese mindestens zwei Strömungsbegrenzer wird Flüssigkeit, die aus einer Isolierkanne über den Flüssigkeitskanal des Isolierkannendeckels ausgegeben wird, näher an die Schnaupenkante der Isolierkanne herangeführt und somit länger geführt. Dadurch wird erreicht, dass mit dem erfindungsgemäßen Isolierkannendeckel Flüssigkeiten gezielter, ruhiger und mit weniger Spritzern ausgegossen werden können.

Bedingt durch die starken, scharfen Richtungsänderungen und kurzen Strömungslängen im Deckel kommt der Flüssigkeitsstrom bereits mit starken Verwirbelungen am Austritt aus dem Flüssigkeitskanal an. Dies führt zu einem unruhigen, unkontrollierten und somit auch breiten Strömungsverlauf über die Schnaupe.

Die EP 2 796 078 A1 offenbart einen isolierenden Getränkebehälter mit Deckel, der eine kompakte Bauweise und günstige Ausgießwirkung durch Strömungsbegrenzer an einem Flüssigkeitskanal aufweist.

Die KR 101 581 270 B1 offenbart einen isolierenden Getränkebehälter mit Deckel, der eine Stop-Struktur enthält, sodass ein Getränk ohne die Gefahr eines abfallenden Deckels auf einfache Art und Weise ausgegossen werden kann.

Die JP H08-56857 A offenbart einen Kannendeckel, bei dem eine Wandung, die eine Flüssigkeitspassage nach außen bildet, von außen mit einer Bürste waschbar ist.

Ausgehend hiervon war es die Aufgabe der vorliegenden Erfindung einen Isolierkannendeckel bereitzustellen, der einen ruhigeren, kontrollierteren und schmaleren Strömungsverlauf über die Schnaupe einer Isolierkanne ermöglicht.

Die Aufgabe wird gelöst durch die Isolierkanne mit den Merkmalen von Anspruch 1 und die Verwendung der Isolierkanne mit den

Merkmalen von Anspruch 10. Die abhängigen Ansprüche zeigen bevorzugte Ausführungsformen auf.

Erfindungsgemäß wird eine Isolierkanne mit den Merkmalen des Anspruchs 1 bereitgestellt.

Die mindestens zwei Strömungsbegrenzer weisen jeweils eine Form auf, die im Wesentlichen der Form eines Kreissektors entspricht. Diese Form ist vorteilhaft, da somit das ideale Gegenstück zur Form gängiger Schnaupen von Isolierkannen geschaffen ist. Mit anderen Worten zeichnet sich diese Form einerseits durch eine hervorragende Strömungsbegrenzungswirkung aus und ermöglicht andererseits die flüssigkeitsdichte Abtrennung des Flüssigkeitskanals vom Luftkanal bei (fest) aufgeschraubtem Isolierkannendeckel.

Durch die mindestens zwei Strömungsbegrenzer am Ausgang des Flüssigkeitskanals wird die Strömung zum einen länger geführt und somit beruhigt. Zum anderen wird bei auf einer Isolierkanne aufgeschraubtem Isolierkannendeckel die Strömung näher an die Schnaupenkante der Isolierkanne herangeführt.

Dadurch wird verhindert, dass die Flüssigkeit auf turbulente Weise, unkontrolliert und undefiniert in einem breiten Strom über die Schnaupenkante fließt. Mit anderen Worten wird durch die seitlichen Strömungsbegrenzer erreicht, dass mit dem erfindungsgemäßen Isolierkannendeckel Flüssigkeiten gezielter, ruhiger und mit weniger Spritzern ausgegossen werden können.

In einer bevorzugten Ausgestaltungsform ist der Isolierkannendeckel dadurch gekennzeichnet, dass die mindestens zwei Strömungsbegrenzer den Flüssigkeitskanal in eine Richtung verlängern, die im Wesentlichen senkrecht zur Drehachse gerichtet ist. Erfindungsgemäß verlängern die mindestens zwei Strömungsbegrenzer den Flüssigkeitskanal in Richtung eines Schnaupenbereichs einer Isolierkanne, auf die der Isolierkannendeckel aufgeschraubt ist. Besonders bevorzugt verlängern die mindestens zwei Strömungsbegrenzer den Flüssigkeitskanal so weit, dass die Distanz einer Oberfläche der mindestens zwei Strömungsbegrenzer, die einer Oberfläche eines Schnaupenbereichs einer Isolierkanne gegenüberliegt, zu der Oberfläche des Schnaupenbereichs ≤ 1,5 mm, bevorzugt ≤ 1 mm, besonders bevorzugt ≤ 0,5 mm, beträgt. Diese Ausgestaltungsform hat den Vorteil, dass neben der gezielteren ruhigeren Strömung von Getränk aus der Isolierkanne bewirkt wird, dass beim oder nach dem Ausgießvorgang kein restliches Getränk in dem Raum zwischen Isolierkannendeckel und Isolierkanne vom Flüssigkeitskanal zu dem Luftkanal gelangt. Folglich wird durch diese Ausführungsform einerseits ein Auskühlen von Getränk in diesem Bereich verhindert und andererseits unterbunden, dass im Luftkanal befindliches Getränk trocknet und diesen verstopft.

Die mindestens zwei Strömungsbegrenzer können im Wesentlichen in axial gleicher Ausrichtung wie der Flüssigkeitskanal angeordnet sein, wobei die mindestens zwei Strömungsbegrenzer bevorzugt zumindest eine erste und eine zweite Seitenwand des Flüssigkeitskanals verlängern, wobei dieser Teil der ersten und zweiten Seitenwand besonders bevorzugt im Wesentlichen parallel zur Drehachse ausgerichtet ist.

Die mindestens zwei Strömungsbegrenzer können eine Oberfläche aufweisen, die im Wesentlichen eine Innengeometrie des Flüssigkeitskanals fortführt, wobei die mindestens zwei Strömungsbegrenzer bevorzugt zumindest auf einer Seite, besonders bevorzugt einer im Flüssigkeitskanal strömenden Flüssigkeit zugewandten Seite, eine im Wesentlichen plane Oberfläche aufweisen.

Die mindestens zwei Strömungsbegrenzer können
i) ein Material ausgewählt aus der Gruppe bestehend aus Metall, Kunststoff und Mischungen und Kombinationen hiervon, bevorzugt Edelstahl, enthalten oder daraus bestehen; und/oder
ii) monolithisch zu dem Ausgang an der ersten Seitenwand des Isolierkannendeckels sein.

In einer bevorzugten Ausgestaltungsform weist der Flüssigkeitskanal einen Eingang an einer Unterseite des Isolierkannendeckels auf und erstreckt sich bevorzugt von der Unterseite des Isolierkannendeckels zunächst im Wesentlichen parallel zur Drehachse und anschließend im Wesentlichen senkrecht zur Drehachse bis zu einer ersten Seitenwand des Isolierkannendeckels.

Der Luftkanal kann einen Eingang an einer Unterseite des Isolierkannendeckels aufweisen und sich bevorzugt von der Unterseite des Isolierkannendeckels zunächst im Wesentlichen parallel zur Drehachse und anschließend im Wesentlichen senkrecht zur Drehachse bis zu einer zweiten Seitenwand des Isolierkannendeckels erstrecken.

In Bezug auf die Drehachse können der Ausgang des Flüssigkeitskanals zum Ausgang des Luftkanals in einem Winkel im Bereich von 1° bis 180°, bevorzugt 90° bis 180°, besonders bevorzugt 140° bis 180°, insbesondere 170° bis 180°, angeordnet sein. Hierbei sind größere Winkel vorteilhaft, da somit die Entfernung des Flüssigkeitskanals vom Luftkanal minimiert wird und beim Ausgießen von Getränk aus der Isolierkanne (durch Kippen der Isolierkanne) verhindert wird, dass Flüssigkeit vom Inneren der Isolierkanne in den Luftkanal gelangt und dessen Druckausgleichsfunktion beeinträchtigt.

Erfindungsgemäß ist der Isolierkannendeckel auf einer Isolierkanne aufgeschraubt, besonders bevorzugt ist er dergestalt auf einer Isolierkanner aufgeschraubt, dass keine Flüssigkeit vom Inneren der Isolierkanne über den Flüssigkeitskanal zum Luftkanal gelangen kann. Der Vorteil hierbei ist, dass keine Flüssigkeit zwischen Isolierkannendeckel und Isolierkanne zu dem Luftkanal gelangen und diesen (nach Eintrocknen) verstopfen kann.

Ferner wird die Verwendung der erfindungsgemäßen Isolierkanne zur Erzeugung eines ruhigen, kontrollierten und/oder schmalen Flüssigkeitsstrahls vorgeschlagen.

Anhand der nachfolgenden Figuren soll der erfindungsgemäße Gegenstand näher erläutert werden, ohne diesen auf die hier dargestellten, spezifischen Ausgestaltungsformen einschränken zu wollen.

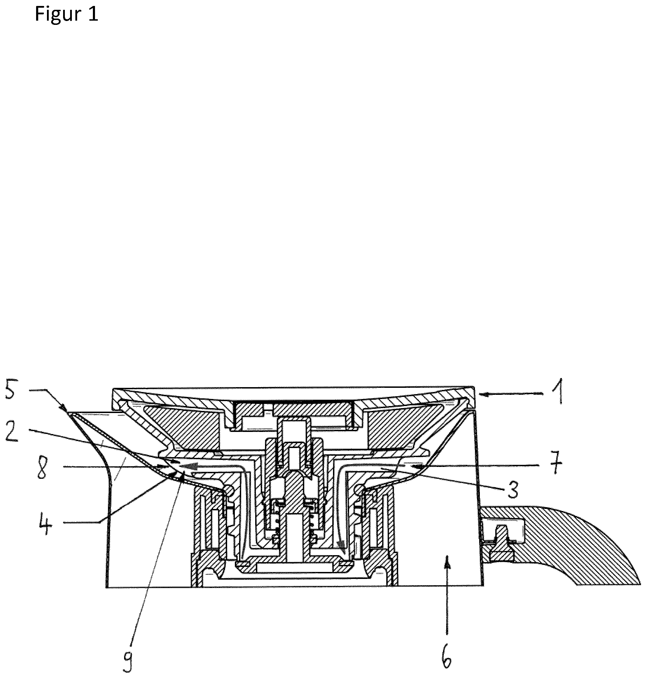

Figur 1 zeigt schematisch die Funktionsweise des erfindungsgemäßen Isolierkannendeckels 1 über einen Querschnitt durch einen auf eine Isolierkanne 6 aufgeschraubten Isolierkannendeckel 1. In einem Pfeil 7 ist dargestellt, wie Luft beim Kippen der Isolierkanne 6 durch den Luftkanal 3 in die Isolierkanne 6 strömt. In dem Pfeil 8 ist dargestellt, wie durch den Druckausgleich innerhalb der Isolierkanne 6 Flüssigkeit aus der Isolierkanne 6 ungehindert entlang des Flüssigkeitskanals 2 und entlang der Schnaupe 5 der Isolierkanne 6 ausgegeben werden kann. Durch die zwei seitlichen Strömungsbegrenzer 4 am Ende des Flüssigkeitskanals 2 wird die Flüssigkeit in einem besonders ruhigen, kontrollierten und schmalen Strömungsverlauf über die Schnaupe 5 ausgegeben.

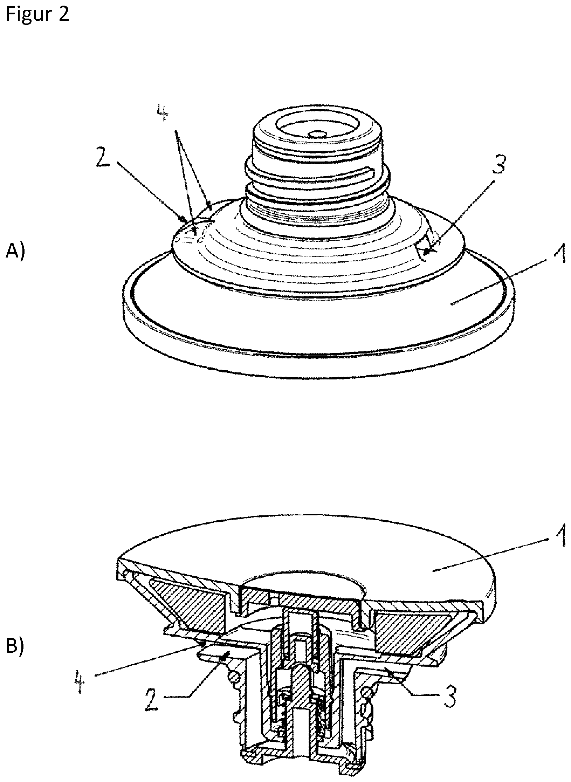

Figur 2 zeigt schematisch einen erfindungsgemäßen Isolierkannendeckel 1 (Fig. 2A) und einen Querschnitt durch diesen Isolierkannendeckel 1 (Fig. 2B). Dargestellt sind der Luftkanal 3 zum Einströmen von Luft in die Isolierkanne und der Flüssigkeitskanal 2 zum Ausgeben von Flüssigkeit aus der Isolierkanne bei aufgeschraubtem Isolierkannendeckel 1. Der erfindungsgemäße Isolierkannendeckel weist am Ende des Flüssigkeitskanals 2 (das vom Inneren der Isolierkanne weggerichtete Ende) zwei seitliche Strömungsbegrenzer 4 auf, welche eine besonders ruhige, kontrollierte und schmalen Auslauf von Flüssigkeit aus der Isolierkanne erlauben.

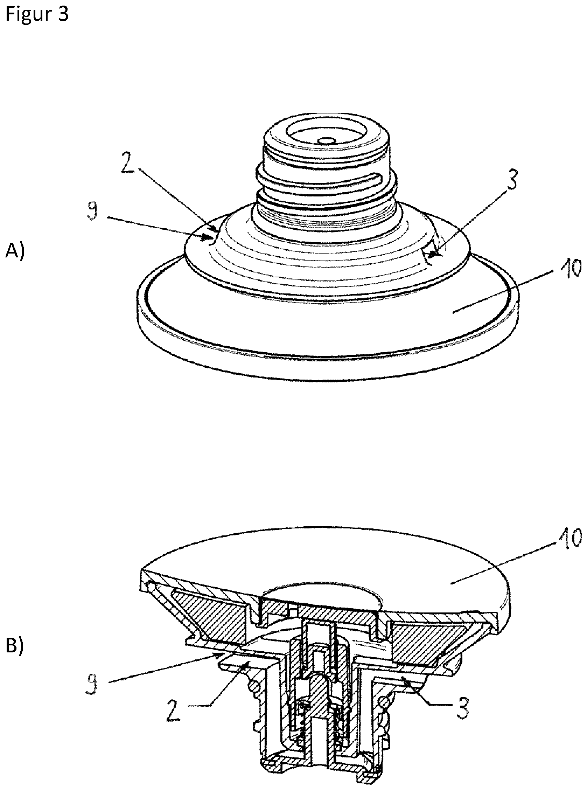

Figur 3 zeigt schematisch einen herkömmlichen Isolierkannendeckel 10 aus dem Stand der Technik (Fig. 3A) und einen Querschnitt durch diesen Isolierkannendeckel 10 (Fig. 3B). Dargestellt sind der Luftkanal 3 zum Einströmen von Luft in die Isolierkanne und der Flüssigkeitskanal 2 zum Ausgeben von Flüssigkeit aus der Isolierkanne bei aufgeschraubtem Isolierkannendeckel 10. Der Isolierkannendeckel weist am Ende des Flüssigkeitskanals 2 (das vom Inneren der Isolierkanne weggerichtete Ende) ein Kanalende 9 ohne (seitliche) Strömungsbegrenzer auf, was einen lebhaften, unkontrollierten und breiten Auslauf von Flüssigkeit aus der Isolierkanne bedingt.

## Patentansprüche

1. Isolierkanne mit einem Isolierkannendeckel (1), enthaltend
a) ein Gewinde mit einer Drehachse zur Befestigung des Isolierkannendeckels (1) an der Isolierkanne (6);
b) einen Flüssigkeitskanal (2), der einen Ausgang an einer ersten Seitenwand des Isolierkannendeckels (1) aufweist; und
c) einen Luftkanal (3), der einen Ausgang an einer zweiten Seitenwand des Isolierkannendeckels (1) aufweist;
wobei der Flüssigkeitskanal (2) am Ausgang der ersten Seitenwand mindestens zwei Strömungsbegrenzer (4) aufweist, die zumindest bereichsweise jeweils eine Form aufweisen, die im Wesentlichen der Form eines Kreissektors entspricht, wobei der Isolierkannendeckel (1) auf einer Isolierkanne (6) aufgeschraubt ist, **dadurch gekennzeichnet, dass** die mindestens zwei Strömungsbegrenzer (4) den Flüssigkeitskanal (2) in Richtung eines Schnaupenbereichs (5) der Isolierkanne (6) verlängern.

2. Isolierkanne gemäß Anspruch 1, **dadurch gekennzeichnet, dass** die mindestens zwei Strömungsbegrenzer (4) den Flüssigkeitskanal (2) so weit verlängern, dass die Distanz einer Oberfläche der mindestens zwei Strömungsbegrenzer (4), die einer Oberfläche des Schnaupenbereichs (5) der Isolierkanne (6) gegenüberliegt, zu der Oberfläche des Schnaupenbereichs (5) ≤ 1,5 mm, bevorzugt ≤ 1 mm, besonders bevorzugt ≤ 0,5 mm, beträgt.

3. Isolierkanne gemäß einem der vorhergehenden Ansprüche, **dadurch gekennzeichnet, dass** die mindestens zwei Strömungsbegrenzer (4) im Wesentlichen in axial gleicher Ausrichtung wie der Flüssigkeitskanal (2) angeordnet sind, wobei die mindestens zwei Strömungsbegrenzer (4) bevorzugt zumindest eine erste und eine zweite Seitenwand des Flüssigkeitskanals (2) verlängern, wobei dieser Teil der ersten und zweiten Seitenwand besonders bevorzugt im Wesentlichen parallel zur Drehachse ausgerichtet ist.

4. Isolierkanne gemäß einem der vorhergehenden Ansprüche, **dadurch gekennzeichnet, dass** die mindestens zwei Strömungsbegrenzer (4) eine Oberfläche aufweisen, die im Wesentlichen eine Innengeometrie des Flüssigkeitskanals (2) fortführt, wobei die mindestens zwei Strömungsbegrenzer (4) bevorzugt zumindest auf einer Seite, besonders bevorzugt einer im Flüssigkeitskanal (2) strömenden Flüssigkeit zugewandten Seite, eine im Wesentlichen plane Oberfläche aufweisen.

5. Isolierkanne gemäß einem der vorhergehenden Ansprüche, **dadurch gekennzeichnet, dass** die mindestens zwei Strömungsbegrenzer (4)
i) ein Material ausgewählt aus der Gruppe bestehend aus Metall, Kunststoff und Mischungen und Kombinationen hiervon, bevorzugt Edelstahl, enthalten oder daraus bestehen; und/oder
ii) monolithisch zu dem Ausgang an der ersten Seitenwand des Isolierkannendeckels (1) sind.

6. Isolierkanne gemäß einem der vorhergehenden Ansprüche, **dadurch gekennzeichnet, dass** der Flüssigkeitskanal (2) einen Eingang an einer Unterseite des Isolierkannendeckels (1) aufweist und sich bevorzugt von der Unterseite des Isolierkannendeckels (1) zunächst im Wesentlichen parallel zur Drehachse und anschließend im Wesentlichen senkrecht zur Drehachse bis zu einer ersten Seitenwand des Isolierkannendeckels (1) erstreckt.

7. Isolierkanne gemäß einem der vorhergehenden Ansprüche, **dadurch gekennzeichnet, dass** der Luftkanal (3) einen Eingang an einer Unterseite des Isolierkannendeckels (1) aufweist und sich bevorzugt von der Unterseite des Isolierkannendeckels (1) zunächst im Wesentlichen parallel zur Drehachse und anschließend im Wesentlichen senkrecht zur Drehachse bis zu einer zweiten Seitenwand des Isolierkannendeckels (1) erstreckt.

8. Isolierkanne gemäß einem der vorhergehenden Ansprüche, **dadurch gekennzeichnet, dass** in Bezug auf die Drehachse der Ausgang des Flüssigkeitskanals (2) zum Ausgang des Luftkanals (3) in einem Winkel im Bereich von 1° bis 180°, bevorzugt 90° bis 180°, besonders bevorzugt 140° bis 180°, insbesondere 170° bis 180°, angeordnet ist.

9. Isolierkanne gemäß einem der vorhergehenden Ansprüche, **dadurch gekennzeichnet, dass** der Isolierkannendeckel (1) dergestalt auf der Isolierkanne (6) aufgeschraubt ist, dass keine Flüssigkeit vom Inneren der Isolierkanne (6) über den Flüssigkeitskanal (2) zum Luftkanal (3) gelangen kann.

10. Verwendung einer Isolierkanne gemäß einem der vorhergehenden Ansprüche zur Erzeugung eines ruhigen, kontrollierten und/oder schmalen Flüssigkeitsstrahls.

## Claims

1. An insulating vessel having an insulating vessel cover (1), comprising
a. A thread with a rotational axis for securing the insulating vessel cover (1) to the insulating vessel (6);
b. A fluid channel (2), which has an outlet at a first lateral wall of the insulating vessel cover (1); and
c. An air channel (3), which has an outlet at a second lateral wall of the insulating vessel cover (1);
wherein the fluid channel (2) has at least two flow delimiters (4) at the outlet of the first lateral wall, at least regions of which flow delimiters (4) each have a form substantially corresponding to the form of a circle sector,
wherein the insulating vessel cover (1) is screwed on an insulating vessel (6),
**characterised in that** the at least two flow delimiters (4) lengthen the fluid channel (2) in the direction of a spout region (5) of the insulating vessel (6).

2. An insulating vessel according to claim 1, **characterised in that** the at least two flow delimiters (4) lengthen the fluid channel (2) to an extent that the distance of a surface of the at least two fluid delimiters (4), which surface faces a surface of the spout region (5) of the insulating vessel (6), from the surface of the spout region (5) amounts to ≤ 1.5 mm, preferably ≤ 1 mm, particularly preferably ≤ 0.5 mm.

3. An insulating vessel according to any one of the preceding claims, **characterised in that** the at least two flow delimiters (4) are arranged substantially in an axially identical orientation to the fluid channel (2), wherein the at least two flow delimiters (4) lengthen preferably at least a first and a second lateral wall of the fluid channel (2), wherein this part of the first and second lateral wall is particularly preferably oriented substantially parallel to the rotational axis.

4. An insulating vessel according to any one of the preceding claims, **characterised in that** the at least two flow delimiters (4) have a surface which substantially continues an internal geometry of the fluid channel (2), wherein the at least two flow delimiters (4) have preferably at least on one side, particularly preferably on a side facing fluid flowing in the fluid channel (2), a substantially plane surface.

5. An insulating vessel according to any one of the preceding claims, **characterised in that** the at least two flow delimiters (4)
i. Comprise or consist of a material selected from the group consisting of metal, plastics material and mixtures and combinations thereof, preferably stainless steel; and/or
ii. Are monolithic with regard to the outlet at the first lateral wall of the insulating vessel cover (1).

6. An insulating vessel according to any one of the preceding claims, **characterised in that** the fluid channel (2) has an inlet at an underside of the insulating vessel cover (1) and preferably extends, from the underside of the insulating vessel cover (1), firstly substantially parallel to the rotational axis and then substantially perpendicular to the rotational axis as far as a first lateral wall of the insulating vessel cover (1).

7. An insulating vessel according to any one of the preceding claims, **characterised in that** the air channel (3) has an inlet at an underside of the insulating vessel cover (1) and preferably extends, from the underside of the insulating vessel cover (1), firstly substantially parallel to the rotational axis and then substantially perpendicular to the rotational axis as far as a second lateral wall of the insulating vessel cover (1).

8. An insulating vessel according to any one of the preceding claims, **characterised in that** in relation to the rotational axis, the outlet of the fluid channel (2) is arranged at an angle in the range from 1° to 180°, preferably 90° to 180°, particularly preferably 140° to 180°, in particular 170° to 180°, with respect to the outlet of the air channel (3).

9. An insulating vessel according to any one of the preceding claims, **characterised in that** the insulating vessel cover (1) is screwed on the insulating vessel (6) in such a manner that no fluid can reach the air channel (3) from the interior of the insulating vessel (6) via the fluid channel (2).

10. Use of an insulating vessel according to any one of the preceding claims for generating a calm, controlled and/or narrow fluid jet.

## Revendications

1. Récipient isotherme avec un couvercle de récipient isotherme (1), comprenant
a) un filetage avec un axe de rotation pour la fixation du couvercle de récipient isotherme (1) au récipient isotherme (6) ;
b) un canal de liquide (2), qui présente une sortie au niveau d'une première paroi latérale du couvercle de récipient isotherme (1) ; et
c) un canal d'air (3), qui présente une sortie au niveau d'une deuxième paroi latérale du couvercle de récipient isotherme (1) ;
dans lequel le canal de liquide (2) à la sortie de la première paroi latérale comprend au moins deux limiteurs de débit (4) qui présentent, au moins à certains endroits, une forme qui correspond globalement à la forme d'un secteur circulaire,
dans lequel le couvercle de récipient isotherme (1) est vissé sur un récipient isotherme (6), **caractérisé en ce que** les au moins deux limiteurs de débit (4) prolongent le canal de liquide (2) en direction d'une zone de bec verseur (5) du récipient isotherme (6).

2. Récipient isotherme selon la revendication 1, **caractérisé en ce que** les au moins deux limiteurs de débit (4) prolongent le canal de liquide (2) jusqu'à ce que la distance entre la surface des au moins deux limiteurs de débit (4), qui fait face à une surface de la zone de bec verseur (5) du récipient isotherme (6), et la surface de la zone de bec verseur (5) soit ≤ 1,5 mm, de préférence ≤ 1 mm, plus particulièrement de préférence ≤ 0,5 mm.

3. Récipient isotherme selon l'une des revendications précédentes, **caractérisé en ce que** les au moins deux limiteurs de débit (4) sont disposés sensiblement dans la même orientation axiale que le canal de liquide (2), dans lequel les au moins deux limiteurs de débit (4) prolongent de préférence au moins une première et une deuxième parois latérales du canal de liquide (2), dans lequel cette partie des première et deuxième parois latérales est orientée, d'une manière particulièrement préférée, sensiblement parallèlement à l'axe de rotation.

4. Récipient isotherme selon l'une des revendications précédentes, **caractérisé en ce que** les au moins deux limiteurs de débit (4) présentent une surface qui prolonge globalement une géométrie interne du canal de liquide (2), dans lequel les au moins deux limiteurs de débit (4) comprennent, de préférence au moins sur un côté, plus particulièrement de préférence sur un côté orienté vers le liquide s'écoulant dans le canal de liquide (2), une surface sensiblement plane.

5. Récipient isotherme selon l'une des revendications précédentes, **caractérisé en ce que** les au moins deux limiteurs de débit (4)
i) contiennent un ou sont constitués d'un matériau sélectionné dans le groupe constitué d'un métal, d'une matière plastique et de mélanges et combinaisons de ceux-ci, de préférence de l'acier inoxydable ; et/ou
ii) sont réalisés d'une seule pièce avec la sortie sur la première paroi latérale du couvercle de récipient isotherme (1).

6. Récipient isotherme selon l'une des revendications précédentes, **caractérisé en ce que** le canal de liquide (2) présente une entrée au niveau d'un côté inférieur du couvercle de récipient isotherme (1) et s'étend de préférence à partir du côté inférieur du couvercle de récipient isotherme (1) d'abord de manière sensiblement parallèle à l'axe de rotation puis de manière sensiblement perpendiculaire à l'axe de rotation jusqu'à une première paroi latérale du couvercle de récipient isotherme (1).

7. Récipient isotherme selon l'une des revendications précédentes, **caractérisé en ce que** le canal d'air (3) comprend une entrée au niveau d'un côté inférieur du couvercle de récipient isotherme (1) et s'étend de préférence à partir du côté inférieur du couvercle de récipient isotherme (1) d'abord de manière sensiblement parallèle à l'axe de rotation puis de manière sensiblement perpendiculaire à l'axe de rotation jusqu'à une deuxième paroi latérale du couvercle de récipient isotherme (1).

8. Récipient isotherme selon l'une des revendications précédentes, **caractérisé en ce que**, par rapport à l'axe de rotation, la sortie du canal de liquide (2) est disposée, par rapport à la sortie du canal d'air (3) avec un angle de l'ordre de 1° à 180°, de préférence de 90° à 180°, plus particulièrement de préférence de 140° à 180°, plus particulièrement de 170° à 180°.

9. Récipient isotherme selon l'une des revendications précédentes, **caractérisé en ce que** le couvercle de récipient isotherme (1) est vissé sur le récipient isotherme (6) de façon à ce qu'aucun liquide ne puisse pénétrer de l'intérieur du récipient isotherme (6) dans le canal d'air (3) par le canal de liquide (2).

10. utilisation d'un récipient isotherme selon l'une des revendications précédentes pour la production d'un jet de liquide calme, contrôlé et/ou étroit.
